# EUROPEAN PATENT APPLICATION

(11) **EP 4 645 879 A1**
(43) Date of publication of application: **05.11.2025**
(21) Application number: 23910222.1
(22) Date of filing: 15.12.2023
(51) Int. Cl.: H04N 21/4402, H04N 21/431, H04N 21/466

(54) **MEDIA CONTENT GENERATION METHOD AND APPARATUS, AND DEVICE, READABLE STORAGE MEDIUM AND PRODUCT**

(30) Priority: 30.12.2022 CN 202211731361
(71) Applicant: Beijing Zitiao Network Technology Co., Ltd., Beijing 100190 (CN)
(72) Inventor: MA, Zhiwei, Beijing 100028 (CN); ZHANG, Nuomeng, Beijing 100028 (CN)
(74) Representative: Grünecker Patent- und Rechtsanwälte PartG mbB
(86) International application number: PCT/CN2023/139268
(87) International publication number: WO 2024/140292

(57) **Abstract**

Embodiments of the invention provide a media content generation method, apparatus, device, readable storage medium and product. The method includes: displaying a media content obtaining interface associated with a target interaction object in response to a predetermined trigger operation; generating target media content corresponding to the target interaction object according to the interaction operation triggered based on the target interaction object, wherein the target media content includes a ranking list control associated with an interaction result of the target interaction object; and in response to the posting operation, posting the target media content.

## Description

This application claims the benefit of Chinese Patent Application No. 202211731361.4, filed December 30, 2022, entitled "MEDIA CONTENT GENERATION METHOD, APPARATUS, DEVICE, READABLE STORAGE MEDIUM AND PRODUCT" the entire content of which is incorporated herein by reference.

### FIELD

The embodiment of the invention relates to the technical field of interface interaction, in particular to a media content generation method, apparatus, device, readable storage medium and product.

### BACKGROUND

Currently, many video types of application software provide a game effect (that is, an effect in which a game result can be obtained), or a video interaction method of a type of game or challenge in which an interaction score or an interaction result can be obtained. Taking the game effect as an example, when the user selects the game effect from an effect list, a video can be shot based on the game effect, and a game score is displayed. However, existing game effects often have poor interactivity between users.

### SUMMARY

Embodiments of the invention provide a media content generation method, apparatus, device, readable storage medium and product, and is used for solving the technical problem of poor interactivity of existing media content including an interaction result.

According to a first aspect, embodiments of the present disclosure provide a media content generation method, applied on a client of a first user, including:
displaying a media content obtaining interface associated with a target interaction object in response to a predetermined trigger operation by the first user;
generating, according to an interaction operation triggered based on the target interaction object by the first user within the media content obtaining interface, target media content corresponding to the target interaction object, where the target media content includes a ranking list control associated with an interaction result of the target interaction object; and
posting the target media content in response to a posting operation triggered by the first user.

According to a second aspect, embodiments of the present disclosure provide a media content generation method, applied on a client of a second user, including:
playing target media content in a media content play interface, where the target media content includes a ranking list control associated with an interaction result of a target interaction object; and
displaying a ranking list interface corresponding to the target interaction object in response to a trigger operation on the ranking list control by the second user, where the ranking list interface includes ranking list information corresponding to the target interaction object in at least one dimension.

According to a third aspect, embodiments of the present disclosure provide a media content generation apparatus, applied on a client of a first user, including:
a display module, configured to display a media content obtaining interface associated with a target interaction object in response to a predetermined trigger operation by the first user;
a generation module, configured to generate, based on an interaction operation triggered based on the target interaction object by the first user in the media content obtaining interface, target media content corresponding to the target interaction object, where the target media content includes a ranking list control associated with an interaction result of the target interaction object; and
a posting module, configured to post the target media content in response to a posting operation triggered by the first user.

According to a fourth aspect, embodiments of the present disclosure provide a media content generation apparatus, applied on a client of a second user, including:
a playing module, configured to play target media content in a media content playing interface, where the target media content includes a ranking list control associated with an interaction result of the target interaction object; and
a display module, configured to display a ranking list interface corresponding to the target interaction object in response to a trigger operation on the ranking list control by the second user, where the ranking list interface includes ranking list information corresponding to the target interaction object in at least one dimension.

According to a fifth aspect, embodiments of the present disclosure provide an electronic device, including a processor and a memory;
the memory storing computer executable instructions; and
the processor executes the computer-executable instructions stored in the memory, so that the at least one processor executes the media content generation method according to the first aspect and various possible designs of the first aspect.

According to a sixth aspect, embodiments of the present disclosure provide a computer-readable storage medium, where the computer-readable storage medium stores computer-executable instructions, and when the processor executes the computer-executable instruction, the media content generation method according to the first aspect and the possible designs of the first aspect is implemented.

According to a seventh aspect, embodiments of the present disclosure provide a computer program product, including a computer program, where the computer program, when executed by a processor, implements the media content generation method according to the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is a media content generation method according to embodiments of the present disclosure;
FIG. 2 is a schematic diagram of interface interaction according to embodiments of the present disclosure;
FIG. 3 is a schematic flowchart of a media content generation method according to another embodiment of the present disclosure;
FIG. 4 is a schematic diagram of a display interface according to embodiments of the present disclosure;
FIG. 5 is a schematic diagram of a display interface according to embodiments of the present disclosure;
FIG. 6 is a schematic diagram of a display interface according to embodiments of the present disclosure;
FIG. 7 is a schematic flowchart of a media content generation method according to embodiments of the present disclosure;
FIG. 8 is a schematic diagram of interface interaction according to embodiments of the present disclosure;
FIG. 9 is a schematic flowchart of a media content generation method according to another embodiment of the present disclosure;
FIG. 10 is a schematic diagram of interface interaction according to embodiments of the present disclosure;
FIG. 11 is a schematic structural diagram of a media content generation apparatus according to embodiments of the present disclosure;
FIG. 12 is a schematic structural diagram of a media content generation apparatus according to the present disclosure;
FIG. 13 is a schematic structural diagram of an electronic device according to embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

It can be understood that, before the technical solutions disclosed in the embodiments of the present disclosure are used, the types of personal information related to the present disclosure, the usage scope, the usage scenario and the like should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.
As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

The technical solutions of the present disclosure and the technical solutions of the present disclosure will be described in detail below with reference to specific embodiments. The following specific embodiments may be combined with each other, and the same or similar concepts or processes may be omitted in some embodiments. Embodiments of the present invention will be described in detail below with reference to the accompanying drawings.

The invention provides a media content generation method, apparatus, device, readable storage medium and product.

It should be noted that the media content generation method, apparatus, device, readable storage medium, and product provided in the present disclosure may be applied to any scenario in which media content based on target interaction content is generated.

The existing interaction manner based on the media content including the interaction result is generally displaying the interaction result corresponding to the user in the media content after the user completes the interaction operation. However, the display content in the media content generated by using the foregoing method is relatively single, and the user cannot perform further interaction operations based on the interaction result.

In order to enrich the display content in the media content and the interaction operation based on the media content including the interaction result, ranking lists corresponding to different dimensions may be generated after the user completes the interaction operation based on the interaction result and different dimensions to which the user belongs. An associated ranking list control is displayed on a generated media file based on the ranking list. Therefore, when a further user views the media file, the ranking list control can be triggered to view the ranking lists corresponding to different dimensions. In addition, the ranking list control can be triggered, such that the interaction operation can be quickly performed based on the media content, and the interaction result is added to the ranking list.

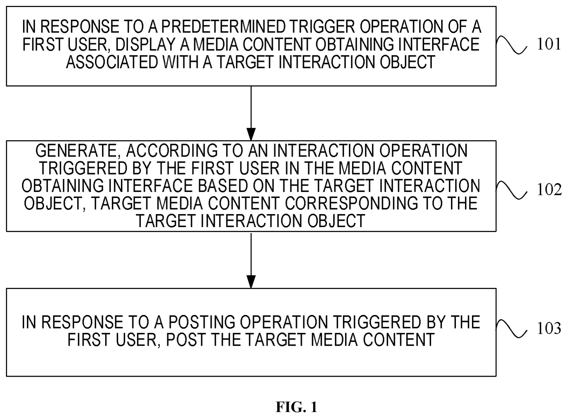

FIG. 1 illustrates a method of media content generation according to embodiments of the present disclosure, applied on a client of a first user, and as shown in FIG. 1, the method includes the following steps:
Step 101: displaying a media content obtaining interface associated with a target interaction object in response to a predetermined trigger operation by the first user.

The execution body of the embodiment is a media content generation apparatus, and the media content generation apparatus may be coupled in the client of the first user, so that a target media file including the ranking list control can be generated based on the trigger operation by the first user in the client of the first user.

In the embodiment, the media content obtaining interface associated with the target interaction object may be displayed in response to a predetermined trigger operation by the first user. The target interaction object includes any object capable of generating an interaction result based on an interaction operation of the user. Optionally, the target interaction object includes, but is not limited to, any one of a game effect, a game, a type of challenges, and the like in which an interaction score or interaction result can be obtained.

For example, the target interaction object is a game effect. In a media content obtaining interface corresponding to the game effect, the first user may play a game through an interaction operation, and obtain a game score when the game ends.

For example, in the media content obtaining interface corresponding to the interactive play of the challenge class, the first user may participate in the challenge through interaction, and obtain the challenge result.

Step 102: according to an interaction operation triggered based on the target interaction object by the first user in the media content obtaining interface, target media content corresponding to the target interaction object is generated, where the target media content includes a ranking list control associated with an interaction result of the target interaction object.

In the embodiment, after the media content obtaining interface is displayed, the first user may perform an interaction operation based on the target interaction object in the media content obtaining interface, and generate an interaction result. For example, when the target interaction object is a game effect, the interaction result may be a game score.

During the interaction operation of the first user based on the target interaction object, an acquisition operation of the media content may be further performed through a predetermined content acquisition control to obtain the target media content corresponding to the target interaction object. The target media content includes a ranking list control associated with the interaction result of the target interaction object.

Step 103: the target media content is posted in response to a posting operation triggered by the first user.

In the embodiment, after the target media content is obtained based on the interaction operation of the target interaction object, the first user may further trigger a posting operation. In response to the posting operation, the target media content may be posted. Therefore, a second user can browse the target media content when browsing a media content stream. Ranking list information corresponding to the target interaction object can be checked based on the ranking list control in the target media content, so that the interactivity based on the target media content is improved.

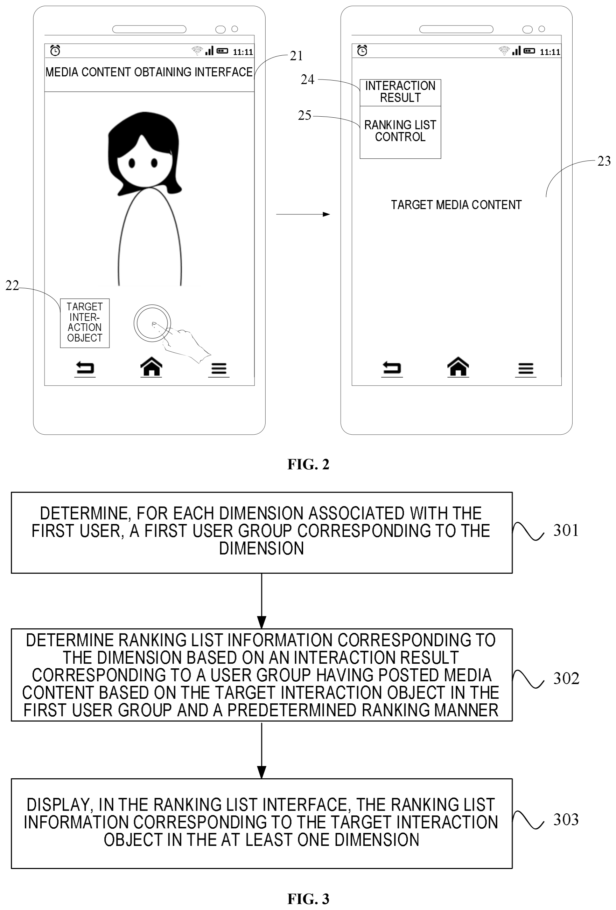

FIG. 2 is a schematic diagram of an interface interaction according to embodiments of the present disclosure. As illustrated in FIG. 2, a media content obtaining interface 21 is displayed and the first user may trigger an interaction operation based on a target interaction object in the media content obtaining interface 21, such that target media content 23 is generated. The target media content 23 includes a ranking list control 25 associated with an interaction result 24 of the target interaction object. The interaction result 24 may be displayed on the ranking list control 25.

According to the media content generation method provided by the embodiment, the target media content including the ranking list control associated with the interaction result of the target interaction object is generated in response to the interaction operation triggered based on the target interaction object by the first user in the media content obtaining interface, and the target media content is posted. Thus the ranking list under different dimensions can be subsequently viewed based on the ranking list control, the display content in the target media content and the interaction mode based on the target interaction object are enriched, and the interactivity between the target interaction object and the user is effectively improved. In addition, when browsing the target media content, a second user may also quickly view the related ranking list based on the ranking list control.

Optionally, based on any one of the foregoing embodiments, step 101 includes:
displaying, in response to a trigger operation by the first user on a trigger control corresponding to a predetermined target interaction object, a media content obtaining interface associated with the target interaction object.

In the embodiment, the target interaction object may correspond to a trigger control. The first user may trigger the trigger control corresponding to the target interaction object, and in response to the trigger operation, the media content obtaining interface associated with the target interaction object may be displayed. Therefore, in the media content obtaining interface, the first user may perform an interaction operation based on the target interaction object.

According to the media content generation method provided in the embodiment, in response to the trigger operation of the trigger control corresponding to the target interaction object by the first user, the media content obtaining interface associated with the target interaction object is jumped to, so that the interaction operation based on the target interaction object can be quickly implemented in the media content obtaining interface.

Optionally, based on any one of the foregoing embodiments, step 101 includes:
obtaining recommendation information sent by a second user having a predetermined association relationship with the first user, where the recommendation information includes a trigger control corresponding to the target interaction object; and
displaying, in response to a trigger operation by the first user on the trigger control corresponding to the target interaction object, the media content obtaining interface associated with the target interaction object.

In the embodiment, a second user having a predetermined association relationship with the first user may send recommendation information to the first user based on the target interaction object, where the recommendation information includes a trigger control corresponding to the target interaction object. Optionally, the second user may send the recommendation information to the first user based on the ranking list control in the media content associated with the target interaction object posted by the second user or another user.

Accordingly, the recommendation information sent by the second user with the predetermined association relationship in the first user may be obtained, where the recommendation information includes the trigger control corresponding to the target interaction object. In response to the trigger operation on the trigger control corresponding to the target interaction object by the first user, the media content obtaining interface associated with the target interaction object is displayed. Therefore, in the media content obtaining interface, the first user may perform an interaction operation based on the target interaction object, and generate target media content associated with the target interaction object.

According to the media content generation method provided in the embodiment, the recommendation information sent by the second user is obtained, so that the trigger operation corresponding to the target interaction object in the recommendation information can be triggered, and the media content obtaining interface associated with the target interaction object is jumped to, thus the interaction operation based on the target interaction object can be quickly achieved in the media content obtaining interface.

Optionally, based on any one of the foregoing embodiments, step 101 includes:
displaying, in response to a media content browsing operation triggered by the first user, first media content posted by the second user and associated with the target interaction object, where the first media content includes a first ranking list control;
displaying a ranking list interface corresponding to the target interaction object in response to a trigger operation by the first user on the first ranking list control, where the ranking list interface includes a trigger control corresponding to the target interaction object; and
displaying, in response to a trigger operation by the first user on the trigger control corresponding to the target interaction object, the media content obtaining interface associated with the target interaction object.

Further, on the basis of any one of the foregoing embodiments, the media content obtaining interface includes a predetermined closing control. After step 102, the method further includes:
canceling display of the ranking list control in response to a trigger operation by the first user on the closing control.

In the embodiment, after the first user completes the interaction operation based on the target interaction object in the media content obtaining interface, and generates the target media file, the first user may further determine, based on the actual requirement, whether to display the ranking list control within the target media file.

Optionally, a closing control is predetermined in the media content obtaining interface. After the target media content is obtained, if a trigger operation by the first user on the closing control is detected, the ranking list control may be canceled. Therefore, the display effect of the target media content is more consistent with the personalized requirement of the first user.

Further, on the basis of any one of the foregoing embodiments, the media content obtaining interface includes identification information of the target interaction object. After canceling the display of the ranking list control in response to the trigger operation by the first user on the closing control, the method further includes:
redisplaying the ranking list control in response to a trigger operation by the first user on the identification information.

In the embodiment, the media content obtaining interface further includes the identification information of the target interaction object. After the first user cancels display of the ranking list control in the target media content, if the first user further needs to redisplay the ranking list control, redisplay of the ranking list control may be implemented by triggering the identification information of the target interaction object.

According to the media content generation method provided in the embodiment, the closing control and the identification information of the target interaction object are set in the media content obtaining interface, so that the first user can flexibly control the opening and closing of the ranking list control based on the closing control and the identification information of the target interaction object, thus the display effect of the target media content is more consistent with the personalized requirement of the first user.

Optionally, based on any one of the foregoing embodiments, step 102 includes:
acquiring an image frame to be detected through a predetermined image acquisition device;
detecting whether the image frame to be detected includes a predetermined key object;
if yes, acquiring media content through the image acquisition device, and determining an interaction result corresponding to the target interaction object; and
adding a ranking list control corresponding to the interaction result to the media content to obtain the target media content.

In the embodiment, in order to simplify the generation process of the target media content, after the media content obtaining interface is displayed, the image frame to be detected may be acquired through a predetermined image acquisition device. Detecting whether the image frame to be detected includes a predetermined key object. The key object may be a head of the first user, or the key object may be a gesture pre-specified by the first user, or the like. This is not limited in the present disclosure.

Further, if it is detected that the image frame to be detected includes a predetermined key object, the media content may be directly acquired through the image acquisition device, an interaction result corresponding to the target interaction object is determined, and a ranking list control corresponding to the interaction result is added to the media content based on the interaction result to obtain the target media content.

According to the media content generation method provided in the embodiment, when it is detected that the image frame includes the predetermined key object, the media content acquisition operation is performed to generate the target media content. Therefore, the first user does not need to manually acquire the media content, and the generation efficiency of the target media content is improved.

Optionally, based on any one of the foregoing embodiments, step 102 includes:
in response to a trigger operation by the first user on a predetermined obtaining control, acquiring media content by the image acquisition device, and determining an interaction result corresponding to the target interaction object; and
adding a ranking list control corresponding to the interaction result to the media content to obtain the target media content.

In the embodiment, after the media content obtaining interface is displayed, the obtaining control may be displayed in the media content obtaining interface. The first user may implement a generation operation of the target media content based on the obtaining control.

Further, in response to the trigger operation by the first user on the predetermined obtaining control, the media content is acquired through the image acquisition device, and an interaction result corresponding to the target interaction object is determined. A ranking list control corresponding to the interaction result is added to the media content to obtain the target media content.

According to the media content generation method provided in the embodiment, the generation operation of the target media content is performed in response to the trigger operation by the first user on the predetermined obtaining control, so that the generation operation of the target media content is more consistent with the actual requirement of the first user.

Further, on the basis of any one of the above embodiments, after step 103, the method further includes:
playing the target media content in a media content play interface in response to a browsing operation triggered by the first user for the target media content, where the target media content includes the ranking list control; and
displaying a ranking list interface corresponding to the target interaction object in response to a trigger operation by the first user on the ranking list control.

The ranking list interface includes ranking list information corresponding to the target interaction object in at least one dimension.

In the embodiment, after the first user posts the target media content, the first user may also perform a browsing operation on the target media content. The target media content is played in the media content play interface in response to a browsing operation triggered by the first user for the target media content, where the target media content includes a ranking list control.

The first user can view the ranking list information under different dimensions associated with the ranking list control by triggering the ranking list control. A ranking list interface corresponding to the target interaction object is displayed in response to a trigger operation by the first user on the ranking list control. The ranking list interface includes ranking list information corresponding to the target interaction object in at least one dimension.

According to the media content generation method provided in the embodiment, the target media content is played in response to the browsing operation triggered by the first user on the target media content, so that the first user can conveniently check the target media content. In addition, by triggering the ranking list control in the target media content, the first user can conveniently check the ranking list information corresponding to the target interaction object.

FIG. 3 is a schematic flowchart of a media content generation method according to another embodiment of the present disclosure. On the basis of any one of the above embodiments, displaying the ranking list interface corresponding to the target interaction object includes:
Step 301: for each dimension associated with the first user, determining a first set of users corresponding to the dimension;
Step 302: determine ranking list information corresponding to the dimension based on an interaction result corresponding to a set of users having posted media content based on the target interaction object in the first set of users and a predetermined ranking manner; and
Step 303: displaying, in the ranking list interface, the ranking list information corresponding to the target interaction object in the at least one dimension.

In the embodiment, ranking list information in a plurality of different dimensions may be displayed in the ranking list interface. Different dimensions associated with the first user may correspond to different sets of users. The dimension includes, but is not limited to, a friend dimension associated with the first user, and a dimension corresponding to a different region where the first user is located. It should be noted that the region information of the user is obtained when the user is fully authorized.

To enable display of the ranking list information in different dimensions, for each dimension associated with the first user, a first set of users corresponding to the dimension may be determined. For example, for a friend dimension, all second users that have a predetermined association relationship with the first user may be determined as the first set of users corresponding to the friend dimension.

For each dimension, the ranking list information corresponding to the dimension may be determined based on the interaction result corresponding to the set of users having posted the media content based on the target interaction object in the first set of users corresponding to the dimension and a predetermined ranking manner. Ranking list information corresponding to each dimension is obtained. The ranking manner may include sorting from high to low according to the interaction result, or sorting from an early time to late time according to a time when a user in the first set of users participates in an interaction operation corresponding to the target interaction object, which is not limited in the present disclosure.

Further, the ranking list information corresponding to the target interaction object in the at least one dimension may be displayed in the ranking list interface. The ranking list information corresponding to each dimension includes both ranking information of a first set of users having completed the interaction operation based on the target interaction object, and identification information of a first set of users having not completed the interaction operation based on the target interaction object. The first user can more intuitively determine the participation of the first set of users corresponding to different dimensions in the ranking list interface.

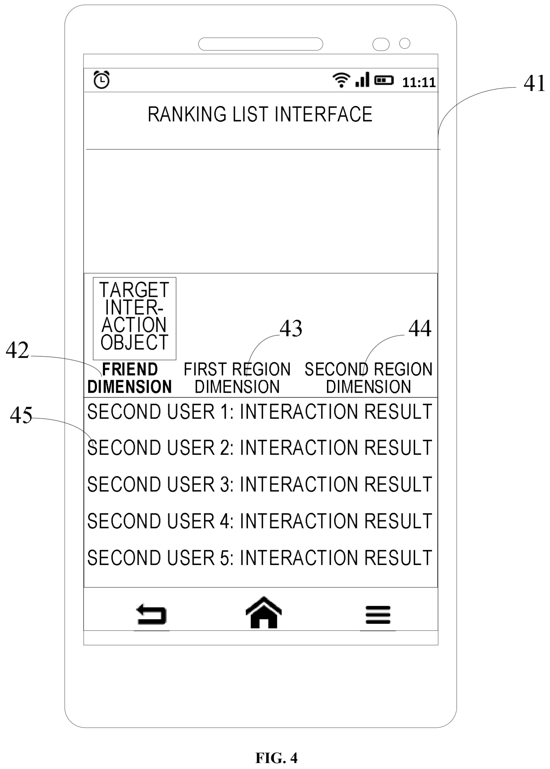

FIG. 4 is a schematic diagram of a display interface according to embodiments of the present disclosure. As shown in FIG. 4, a ranking list page 41 may include at least one dimension, which includes but is not limited to a friend dimension 42, a first region dimension 43, and a second region dimension 44. Ranking list information 45 corresponding to the target interaction object under the friend dimension 42 may be displayed in the ranking list interface 41.

According to the media content generation method provided by the embodiment, for each dimension associated with the first user, a first set of users corresponding to the dimension is determined, and the ranking list information corresponding to the dimension is determined according to the interaction result corresponding to a set of users having posted the media content based on the target interaction object in the first set of users and a predetermined ranking manner, so that the ranking list information corresponding to each dimension can be accurately generated, and the basis is provided for the display of the subsequent ranking list information.

Further, on the basis of any one of the above embodiments, after step 302, the method further includes:
determining ranking information of the interaction result in the ranking list information corresponding to a target dimension satisfying a predetermined display condition; and
displaying the ranking information on the ranking list control.

In the embodiment, after generating the ranking list information corresponding to the different dimensions, the ranking information of the interaction result in the ranking list information corresponding to the target dimension satisfying the predetermined display condition may be determined according to the interaction result corresponding to the first user. And the ranking information is displayed on the ranking list control. Therefore, when browsing the target media content, the first user can determine the current ranking information based on the ranking list control.

According to the media content generation method provided in the embodiment, the ranking information is displayed on the ranking list control, so that the first user can intuitively understand the current ranking information in the target media file.

Further, on the basis of any one of the above embodiments, after step 303, the method further includes:
determining ranking information of the interaction result in the ranking list information corresponding to the target dimension satisfying the predetermined display condition; and
displaying the interaction result and the ranking information in a first display region of the ranking list interface, and displaying the ranking list information corresponding to the target dimension satisfying the predetermined display condition in a second display region of the ranking list interface.

In the embodiment, after generating the ranking list information corresponding to the different dimensions, the ranking information of the interaction result in the ranking list information corresponding to the target dimension satisfying the predetermined display condition may be determined according to the interaction result corresponding to the first user.

Further, the interaction result and the ranking information may be displayed in the first display region of the ranking list interface, and the ranking list information corresponding to the target dimension satisfying the predetermined display condition is displayed in the second display region of the ranking list interface. The first display region may be located on the upper side of the second display region, so that the first user can more intuitively determine the current interaction result and the ranking information of the first user in the ranking list interface.

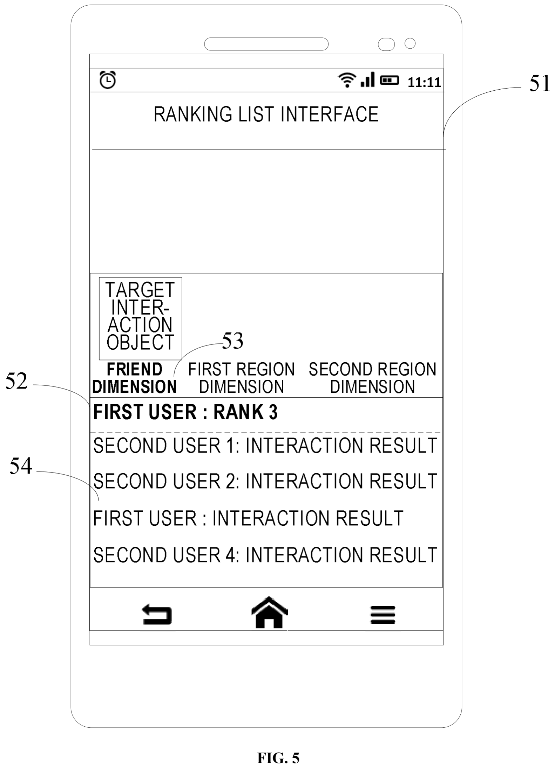

FIG. 5 is a schematic diagram of a display interface according to embodiments of the present disclosure.

According to the media content generation method provided by the embodiment, the interaction result and the ranking information are displayed in the first display region of the ranking list interface, and the ranking list information corresponding to the target dimension satisfying the predetermined display condition is displayed in the second display region of the ranking list interface, so that the current interaction result and the ranking information of the first user can be quickly determined on the basis of viewing the ranking list information in the ranking list interface, and the display content in the ranking list interface can be enriched.

Further, on the basis of any one of the above embodiments, after step 303, the method further includes:
displaying, for each second user in the set of users having posted media content based on the target interaction object, a predetermined first interaction control in a display region associated with the second user; and
displaying, for each second user in a set of users having not posted media content based on the target interaction object, a predetermined first sharing control in a display region associated with the second user.

In the embodiment, ranking list information corresponding to different dimensions may be displayed in the ranking list interface. For each dimension, there may be a user set that has posted the media content based on the target interaction object in the first set of users corresponding to the dimension, or there may be a user set that does not post the media content based on the target interaction object. In order to enable the first user to more intuitively determine the interaction situation of the user in the first set of users based on the target interaction object, for the second user in different user sets, different controls are displayed at the display position associated with the second user, respectively, so that different interaction operations can be performed based on different controls.

Optionally, for each second user in the set of users having posted the media content based on the target interaction object, a predetermined first interaction control is displayed in a display region associated with the second user. The first interaction control may include a like control. Through the trigger operation on the first interaction control associated with any second user, the like operation on the interaction result corresponding to the second user can be achieved.

Optionally, for each second user in the set of users having not posted the media content based on the target interaction object, a predetermined first sharing control is displayed in a display region associated with the second user. The target interaction object may be shared to the second user by a trigger operation on the first sharing control associated with any second user.

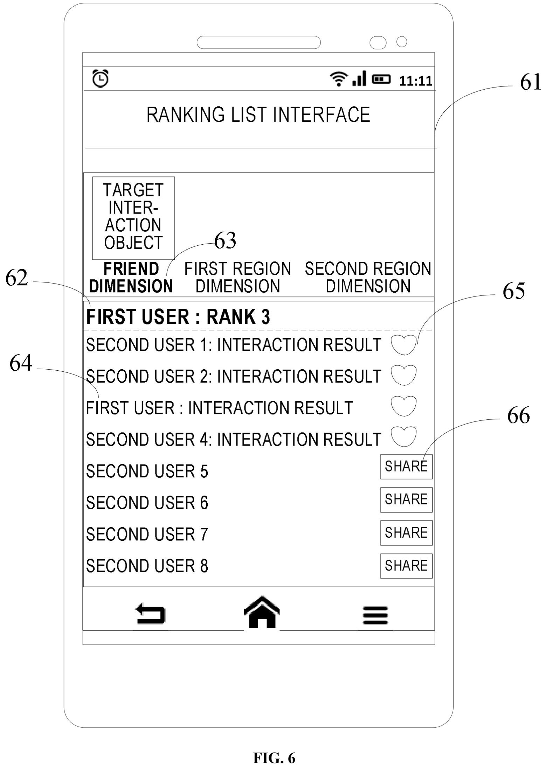

FIG. 6 is a schematic diagram of a display interface according to embodiments of the present disclosure. As shown in FIG. 6, an interaction result and ranking information 62 may be displayed in a first display region of a ranking list page 61, and ranking list information 64 corresponding to a target dimension 63 that satisfies the predetermined display condition can be displayed in a second display region of the ranking list page 61. For each second user in the set of users having posted the media content based on the target interaction object in the ranking list information 64, a predetermined first interaction control 65 is displayed in a display region associated with the second user. For each second user in the set of users having not posted media content based on the target interaction object, a predetermined first sharing control 66 is displayed in a display region associated with the second user.

According to the media content generation method provided in the embodiment, different controls are respectively displayed at the display positions associated with the second user for the second users in different user sets, so that different interaction operations can be performed based on different controls. In addition, by displaying different controls, the first user can more intuitively know the current participation situation of each second user.

Further, on the basis of any one of the above embodiments, after displaying the predetermined first sharing control in the display region associated with the second user, the method further includes:
sending recommendation information associated with the target interaction object to the second user in response to a trigger operation by the first user on the first sharing control.

In the embodiment, the first user may invite the second user to participate in the interaction operation based on the target interaction object by triggering the first sharing control corresponding to any second user. For example, the first user may invite the second user to use the game effect by triggering the first sharing control corresponding to any second user to obtain the game interaction result.

Correspondingly, the recommendation information associated with the target interaction object may be sent to the second user in response to the trigger operation by the first user on the first sharing control. Therefore, the second user can implement the interaction operation based on the target interaction object by triggering the recommendation information.

According to the media content generation method provided in the embodiment, the recommendation information associated with the target interaction object is sent to the second user in response to the trigger operation by the first user on the first sharing control, so that the second user can quickly join the interaction operation based on the target interaction object based on the recommendation information.

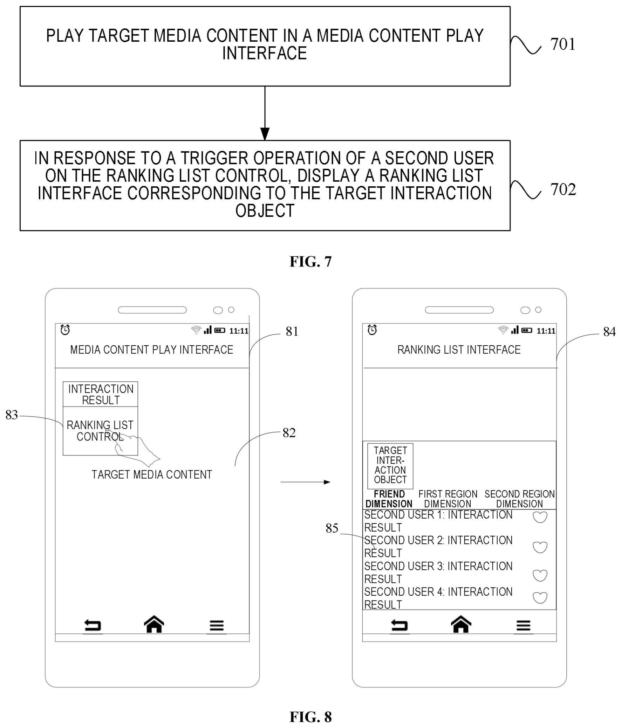

FIG. 7 is a schematic flowchart of a interface display method according to embodiments of the present disclosure. The method is applied on a client of a second user. As illustrated in FIG. 7, the method includes:
Step 701: playing target media content in a media content play interface, where the target media content includes a ranking list control associated with an interaction result of the target interaction object; and
Step 702: displaying a ranking list interface corresponding to the target interaction object in response to a trigger operation on the ranking list control by the second user, where the ranking list interface includes ranking list information corresponding to the target interaction object in at least one dimension.

The executing body of the embodiment is a media content generation apparatus, which may be coupled in the client of the second user. Therefore, the ranking list interface can be displayed based on the ranking list control and the interaction operation based on the target interaction object can be performed according to the trigger operation of the second user.

In the embodiment, the target media content may be played in the media content play interface. Optionally, when the second user browses a media content stream in the media content play interface, the target media content may be played based on a switching operation triggered by the second user. Alternatively, the target media content may be played in response to a trigger operation of the second user on the target media content displayed in the first user personal homepage.

The target media content is generated after the first user performs an interaction operation based on the target interaction object, and the target media content may include a ranking list control associated with an interaction result of the target interaction object. Optionally, the ranking list control may display an interaction result of the first user performing an interaction operation based on the target interaction object. The target interaction object includes, but is not limited to, a game effect in which a game can be played based on a user's interaction operation. For example, the target interaction object may include a game effect, a game, a type of challenges, a video interaction method, and the like in which a game result can be obtained.

Further, after playing the target media content, the second user may trigger the ranking list control in the target media content according to an actual requirement. In response to the trigger operation, a ranking list interface corresponding to the target interaction object may be displayed, where the ranking list interface includes ranking list information corresponding to the target interaction object in at least one dimension.

For example, when the target interaction object is a game effect, the ranking list interface may display a score ranking of a user that initiates an interaction operation based on the game effect to obtain a game score. When the target interaction object is the interactive playing method of the type of challenges, the interaction operation based on the type of challenges may be displayed in the ranking list interface to obtain the ranking of the challenge result of the user.

FIG. 8 is a schematic diagram of an interface interaction according to embodiments of the present disclosure. As shown in FIG. 8, target media content 82 may be played within a media content play page 81. The target media content 82 includes a ranking list control 83 that is associated with an interaction result of the target interactive object. In response to a trigger operation on the ranking list control 83 by the second user, a ranking list interface 84 corresponding to the target interaction object is displayed, wherein the ranking list interface 84 includes ranking list information 85 corresponding to the target interaction object in at least one dimension.

According to the interface display method provided in the embodiment, the target media content including the ranking list control is played in the media content play interface, so that the second user can quickly view the ranking list interface corresponding to the target interaction object based on the ranking list control. Therefore, the interaction operation associated with the target interaction object can be quickly participated based on the ranking list control or the ranking list interface, and the interactivity based on the target media content is improved.

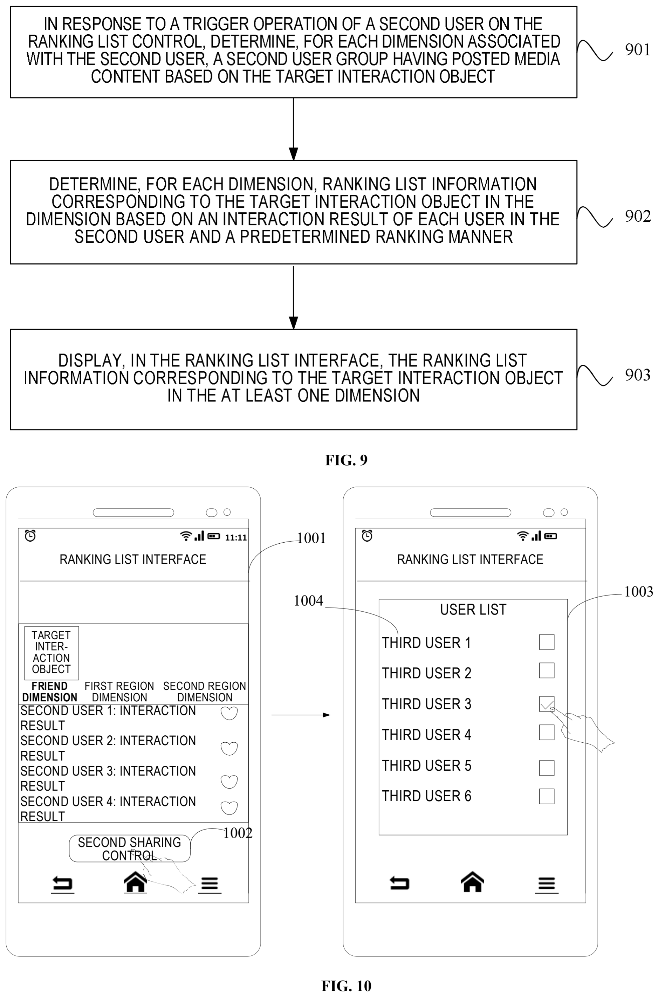

FIG. 9 is a schematic flowchart of a interface display method according to another embodiment of the present disclosure. On the basis of any one of the foregoing embodiments, Step 702 includes:
Step 901: in response to a trigger operation by a second user on the ranking list control, determining, for each dimension associated with the second user, a second set of users having posted media content based on the target interaction object;
Step 902: determining, for each dimension, the ranking list information corresponding to the target interaction object in the dimension according to the interaction result of each user in the second set of users and a predetermined ranking manner; and
Step 903: displaying, in the ranking list interface, the ranking list information corresponding to the target interaction object in the at least one dimension.

In the embodiment, the second user may trigger the ranking list control according to actual requirements. In response to the trigger operation, for each dimension, a second set of users that have posted media content based on the target interaction object associated with the second user may be determined. The dimension includes, but is not limited to, a friend dimension associated with the second user, and a dimension corresponding to a different region where the second user is located.

For each dimension, the ranking list information corresponding to the target interaction object in the dimension may be determined according to the interaction result of each user in the second set of users and a predetermined ranking manner. The ranking list information corresponding to the target interaction object in at least one dimension is displayed in the ranking list interface. The ranking list information corresponding to each dimension includes only the ranking information of the second set of users having posted the media content based on the target interaction object in the current dimension.

Further, on the basis of any one of the above embodiments, after step 702, the method further includes:
displaying, in the ranking list interface, the ranking list information corresponding to a target dimension satisfying the predetermined display condition.

In the embodiment, the ranking list information corresponding to the target dimension satisfying the predetermined display condition may be preferentially displayed in the ranking list interface. The target dimension satisfying the predetermined display condition may be a friend dimension associated with the second user, or may be a dimension that is set or selected by the second user, which is not limited in the present disclosure.

According to the interface display method provided in the embodiment, by determining, for each dimension, the second set of users that has posted the media content based on the target interaction object associated with the second user, the ranking list information corresponding to the target interaction object in the dimension is determined according to the interaction result of each user in the second set of users and a predetermined ranking manner, thus the ranking list information corresponding to each dimension associated with the second user can be accurately determined.

Further, on the basis of any one of the above embodiments, after displaying the ranking list information corresponding to the target dimension satisfying the predetermined display condition in the ranking list interface, the method further includes:
determining a dimension to be displayed selected by the second user in response to a selection operation triggered by the second user in the ranking list interface; and
switching to displaying the ranking list information corresponding to the dimension to be displayed.

In the embodiment, after the ranking list information corresponding to the target dimension satisfying the predetermined display condition is displayed in the ranking list interface, the second user may also switch the dimension currently being displayed according to the actual requirement. The dimension to be displayed selected by the second user may be determined in response to a selection operation triggered by the second user in the ranking list interface. The ranking list information corresponding to the dimension to be displayed is switched to be displayed.

For example, after the ranking list interface is entered based on a click on the ranking list control, the ranking list information of the friend dimension associated with the second user may be displayed. The second user may select the city dimension according to the actual requirement, and determine the city dimension as the dimension to be displayed. In response to the selection operation, ranking list information corresponding to the city dimension is displayed.

According to the interface display method provided by the embodiment, the ranking list information corresponding to the dimension to be displayed selected by the second user is switched and displayed in response to the selection operation triggered by the second user in the ranking list interface, so that the content displayed by the ranking list interface can fit better with the personalized requirement of the second user.

Further, on the basis of any one of the above embodiments, the display region associated with each user in the ranking list information is displayed with a second interaction control.

After displaying the ranking list information corresponding to the target dimension satisfying the predetermined display condition in the ranking list interface, the method further includes:
updating, in response to a trigger operation on the second interaction control by the second user, an interaction number corresponding to the user.

In the embodiment, the display region associated with each user in the ranking list information is displayed with a second interaction control. The second interaction control may include a like control. In response to the trigger operation on the second interaction control by the second user, the number of interactions corresponding to the user may be updated. For example, the second user may perform a like operation on an interaction result of a user by triggering the second interaction control. In response to the like operation, the like number corresponding to the interaction result of the user may be updated.

According to the interface display method provided by the embodiment, the interaction number corresponding to the user is updated in response to the trigger operation on the second interaction control by the second user, so that the second user can perform the interaction operation in the ranking list interface based on the second interaction control, and the interaction mode in the ranking list interface is enriched.

Further, on the basis of any one of the above embodiments, the ranking list interface includes a predetermined second sharing control.

After step 702, the method further includes:
displaying a predetermined user list in response to a trigger operation on the second sharing control by the second user, where the user list includes a plurality of identifiers of a plurality of third users that have a predetermined association relationship with the second user; and
determining a target user selected by the second user based on a selection operation in the user list by the second user; and
sending recommendation information to the target user, where the recommendation information includes a trigger control corresponding to the target interaction object.

In the embodiment, the ranking list interface includes a predetermined second sharing control. The second sharing control may be disposed at the bottom of the ranking list interface to avoid blocking the ranking list content. The second sharing control is configured to, in response to a trigger operation of the user, generate recommendation information based on the target interaction object, and the recommendation information is shared with the target user selected by the second user.

Further, after displaying the ranking list interface, in response to a trigger operation on the second sharing control by the second user, a predetermined user list is displayed, and the user list includes a plurality of identifiers of a plurality of third users having a predetermined association relationship with the second user. In response to the selection operation in the user list by the second user, the target user selected by the second user may be determined. There may be one or more target users. Recommendation information based on the target interaction object is generated and shared to the target user selected by the second user. The recommendation information includes a trigger control corresponding to the target interaction object. Therefore, the target user can view the ranking list content based on the recommendation information, and in addition, the target user can quickly perform the interaction operation based on the target interaction object based on the recommendation information.

FIG. 10 is a schematic diagram of an interface interaction according to embodiments of the present disclosure. As shown in FIG. 10, a ranking list interface 1001 includes a predetermined second sharing control 1002. In response to a trigger operation on the second sharing control 1002 by the second user, a predetermined user list 1003 is displayed, where the user list 1003 includes identifiers 1004 of a plurality of third users. A target user selected by the second user is determined based on a selection operation in the user list by the second user. A recommendation message is sent to the target user.

According to the interface display method provided in the embodiment, in response to the trigger operation on the second sharing control by the second user, the predetermined user list is displayed, and the recommendation information is sent to the target user selected by the second user. Thus the target user can view the ranking list content based on the recommendation information, and in addition, the interaction operation can be performed quickly based on the target interaction object based on the recommendation information.

Further, on the basis of any one of the above embodiments, the ranking list control includes a predetermined third interaction control and/or the ranking list interface includes a predetermined third interaction control. After step 702, the method further includes:
in response to a trigger operation on the third interaction control by the second user, jumping to a media content obtaining interface associated with the target interaction object, so that the second user generates media content associated with the target interaction object in the media content obtaining interface.

In the embodiment, in order to enable the second user to quickly implement the interaction operation based on the target interaction object, the third interaction control may be set in the ranking list interface and/or the ranking list control. Optionally, when the third interaction control is disposed in the ranking list interface, the third interaction control may be set at the bottom of the ranking list interface to avoid blocking the ranking list content. When the third interaction control is set in the ranking list control, the interaction result and the ranking information of the first user may be displayed in the first display region of the ranking list control, and the third interaction control may be displayed in the second display region of the ranking list control.

As an implementation, prompt information may be displayed on the third interaction control, to prompt a user of an interaction operation type to be implemented after the third interaction control is triggered. The prompt information may be text information. For example, the prompt information may be "play together" text.

Further, after displaying the third interaction control, in response to the trigger operation on the third interaction control by the second user, the media content obtaining interface associated with the target interaction object may be jumped to. Therefore, the second user can implement an interaction operation based on the target interaction object in the media content obtaining interface, to obtain an interaction result. The media content associated with the target interaction object is generated based on the media content acquired in the interaction process and the ranking list control corresponding to the interaction result.

According to the interface display method provided in the embodiment, in response to the trigger operation on the third interaction control by the second user, the second user jumps to the media content obtaining interface associated with the target interaction object, so that the second user can quickly implement the interaction operation based on the target interaction object through the third interaction control.

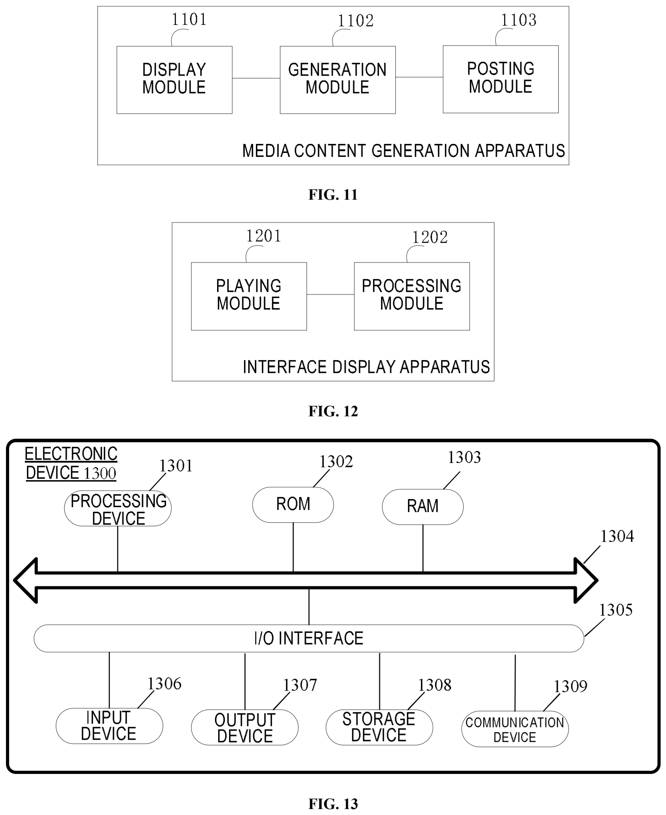

FIG. 11 is a schematic structural diagram of a media content generation apparatus according to embodiments of the present disclosure, applied on a client of a first user. As shown in FIG. 11, the apparatus includes a display module 1101, a generation module 1102, and a posting module 1103. The display module 1101 is configured to display a media content obtaining interface associated with a target interaction object in response to a predetermined trigger operation by the first user. The generation module 1102 is configured to generate, based on an interaction operation triggered by the first user in the media content obtaining interface based on the target interaction object, target media content corresponding to the target interaction object, where the target media content includes a ranking list control associated with an interaction result of the target interaction object. The posting module 1103 is configured to post the target media content in response to a posting operation triggered by the first user.

Further, on the basis of any one of the above embodiments, the display module is configured to display, in response to a trigger operation by the first user on a trigger control corresponding to a predetermined target interaction object, a media content obtaining interface associated with the target interaction object. Alternatively, the display module is configured to: obtain recommendation information sent by a second user having a predetermined association relationship with the first user, where the recommendation information includes a trigger control corresponding to the target interaction object; and display, in response to a trigger operation by the first user on the trigger control corresponding to the target interaction object, a media content obtaining interface associated with the target interaction object. Alternatively, the display module is configured to display, in response to a media content browsing operation triggered by the first user, first media content posted by the second user and associated with the target interaction object, where the first media content includes a first ranking list control; and display a ranking list interface corresponding to the target interaction object in response to a trigger operation by the first user on the first ranking list control, where the ranking list interface includes a trigger control corresponding to the target interaction object; and display, in response to a trigger operation by the first user on the trigger control corresponding to the target interaction object, a media content obtaining interface associated with the target interaction object.

Further, on the basis of any one of the foregoing embodiments, the media content obtaining interface includes a predetermined closing control. The apparatus further includes: a display module, configured to cancel display of the ranking list control in response to a trigger operation by the first user on the closing control.

Further, on the basis of any one of the foregoing embodiments, the media content obtaining interface includes identification information of the target interaction object. The apparatus further includes: a display module configured to redisplay the ranking list control in response to a trigger operation by the first user on the identification information.

Further, on the basis of any one of the above embodiments, the generation module is configured to: acquire an image frame to be detected through a predetermined image acquisition device; detect whether the image frame to be detected includes a predetermined key object; if yes, acquire media content through the image acquisition device, and determine an interaction result corresponding to the target interaction object; and adding a ranking list control corresponding to the interaction result to the media content to obtain the target media content. Alternatively, the generation module is configured to: in response to a trigger operation by the first user on a predetermined obtaining control, acquire media content through the image acquisition device, and determine an interaction result corresponding to the target interaction object; and add a ranking list control corresponding to the interaction result to the media content to obtain the target media content.

Further, on the basis of any one of the above embodiments, the apparatus further includes: a playing module configured to play the target media content in the media content playing interface in response to a browsing operation triggered by the first user for the target media content, where the target media content includes the ranking list control; and a generation module configured to display a ranking list interface corresponding to the target interaction object in response to a trigger operation by the first user on the ranking list control. The ranking list interface includes ranking list information corresponding to the target interaction object in at least one dimension.

Further, on the basis of any one of the above embodiments, the generation module is configured to: for each dimension associated with the first user, determine a first set of users corresponding to the dimension; determine the ranking list information corresponding to the dimension according to the interaction result corresponding to a set of users having posted the media content based on the target interaction object in the first set of users and a predetermined ranking manner; and display in the ranking list interface the ranking list information corresponding to the target interaction object in the at least one dimension.

Further, on the basis of any one of the above embodiments, the generation module is further configured to determine ranking information of the interaction result in the ranking list information corresponding to a target dimension satisfying the predetermined display condition; and display the ranking information on the ranking list control.

Further, on the basis of any one of the above embodiments, the generation module is configured to determine ranking information of the interaction result in the ranking list information corresponding to the target dimension satisfying the predetermined display condition. Displaying the interaction result and the ranking information in the first display region of the ranking list interface, and displaying the ranking list information corresponding to the target dimension satisfying the predetermined display condition in the second display region of the ranking list interface.

Further, on the basis of any one of the foregoing embodiments, the apparatus further includes: a display module configured to display, for each second user in a set of users having posted media content based on the target interaction object, a predetermined first interaction control in a display region associated with the second user. The display module is further configured to display, for each second user in a set of users not posting the media content based on the target interaction object, a predetermined first sharing control in a display region associated with the second user.

Further, on the basis of any one of the foregoing embodiments, the apparatus further includes: a sending module configured to send recommendation information associated with the target interaction object to the second user in response to a trigger operation by the first user on the first sharing control.

FIG. 12 is a schematic structural diagram of a interface display apparatus according to the present disclosure, applied on a client of a second user, as shown in FIG. 12, the apparatus includes a playing module 1201 and a display module 1202. The playing module 1201 is configured to play target media content in a media content play interface, where the target media content includes a ranking list control associated with an interaction result of the target interaction object. The display module 1202 is configured to display a ranking list interface corresponding to the target interaction object in response to a trigger operation on the ranking list control by the second user, where the ranking list interface includes ranking list information corresponding to the target interaction object in at least one dimension.

Further, on the basis of any one of the above embodiments, the display module is configured to: in response to a trigger operation by a second user on the ranking list control, determine, for each dimension associated with the second user, a second set of users that having posted media content based on the target interaction object; determine, for each dimension, the ranking list information corresponding to the target interaction object in the dimension according to the interaction result of each user in the second set of users and a predetermined ranking manner; and display the ranking list information corresponding to the target interaction object in at least one dimension in the ranking list interface.

Further, on the basis of any one of the above embodiments, the display module is configured to: display, within the ranking list interface, ranking list information corresponding to a target dimension satisfying a predetermined display condition.

Further, on the basis of any one of the above embodiments, the display module is further configured to: in response to a selection operation triggered by the second user in the ranking list interface, determine a dimension to be displayed selected by the second user; and switch to displaying the ranking list information corresponding to the dimension to be displayed.

Further, on the basis of any one of the above embodiments, the display region associated with each user in the ranking list information is displayed with a second interaction control. The display module is further configured to: in response to a trigger operation on the second interaction control by the second user, update an interaction number corresponding to the user.

Further, on the basis of any one of the above embodiments, the ranking list interface includes a predetermined second sharing control. The display module is further configured to display a predetermined user list in response to a trigger operation on the second sharing control by the second user, where the user list includes a plurality of identifiers of a plurality of third users that have a predetermined association relationship with the second user; determine a target user selected by the second user based on a selection operation in the user list by the second user; and send recommendation information to the target user, where the recommendation information includes a trigger control corresponding to the target interaction object.

Further, on the basis of any one of the above embodiments, the ranking list control includes a predetermined third interaction control and/or the ranking list interface includes a predetermined third interaction control. The apparatus further includes: a display module, configured to, in response to a trigger operation on the third interaction control by the second user, jump to a media content obtaining interface associated with the target interaction object, to cause the second user to generate media content associated with the target interaction object in the media content obtaining interface.

The apparatus provided in the embodiment may be configured to perform the technical solutions in the foregoing method embodiments, and implementation principles and technical effects thereof are similar, and details are not described herein again in the embodiment.

In order to implement the foregoing embodiments, embodiments of the present disclosure further provides an electronic device, including: a processor and a memory. The memory stores computer-executable instructions.

The processor executes the computer executable instruction stored in the memory, so that the processor executes the media content generation method according to any one of the foregoing embodiments.

The device provided in the embodiment may be configured to perform the technical solutions in the foregoing method embodiments, and implementation principles and technical effects thereof are similar, and details are not described herein again in the embodiment.

FIG. 13 is a schematic structural diagram of an electronic device according to embodiments of the present disclosure. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 1300 may include a processing device (for example, a central processing unit, a graphics processor, etc.) 1301, which may perform various appropriate actions and processing according to a program stored in a read only memory (ROM) 1302 or a program loaded into a random access memory (RAM) 1303 from a storage device 1308. In the RAM 1303, various programs and data required by the operation of the electronic device 1300 are also stored. The processing device 1301, the ROM 1302, and the RAM 1303 are connected to each other through a bus 1304. Input/output (I/O) interface 1305 is also connected to bus 1304.

Generally, the following devices may be connected to the I/O interface 1305: an input device 1306 including, for example, a touch screen, a touch pad, a keyboard, a mouse, a camera, a microphone, an accelerometer, a gyroscope, etc. ; an output device 1307 including, for example, a liquid crystal display (LCD), a speaker, a vibrator, etc.; a storage device 1308 including, for example, a magnetic tape, a hard disk, etc.; and a communication device 1309. The communication device 1309 may allow the electronic device 1300 to communicate wirelessly or wired with other devices to exchange data. While FIG. 13 shows an electronic device 1300 having various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 1309, or installed from the storage device 1308, or from the ROM 1302. When the computer program is executed by the processing device 1301, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

An embodiment of the present disclosure further provides a computer-readable storage medium, where the computer-readable storage medium stores a computer-executable instruction, and when the processor executes the computer-executable instruction, the media content generation method according to any one of the foregoing embodiments is implemented.

An embodiment of the present disclosure further provides a computer program product, including a computer program, where the computer program, when executed by a processor, implements the media content generation method according to any one of the foregoing embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a media content generation method is provided, applied on a client of a first user, including:
displaying a media content obtaining interface associated with the target interaction object in response to a predetermined trigger operation by the first user;
generating, according to an interaction operation triggered by the first user within the media content obtaining interface based on the target interaction object, target media content corresponding to the target interaction object, where the target media content includes a ranking list control associated with an interaction result of the target interaction object; and
posting the target media content in response to a posting operation triggered by the first user.

According to one or more embodiments of the present disclosure, the displaying the media content obtaining interface associated with the target interaction object in response to the predetermined trigger operation by the first user includes:
displaying, in response to a trigger operation by the first user on a trigger control corresponding to a predetermined target interaction object, a media content obtaining interface associated with the target interaction object;
or, the displaying the media content obtaining interface associated with the target interaction object in response to the predetermined trigger operation by the first user includes:
   obtaining recommendation information sent by a second user having a predetermined association relationship with the first user, where the recommendation information includes a trigger control corresponding to the target interaction object; and
   displaying, in response to a trigger operation by the first user on a trigger control corresponding to the target interaction object, a media content obtaining interface associated with the target interaction object;
   or, the displaying the media content obtaining interface associated with the target interaction object in response to the predetermined trigger operation by the first user includes:
      displaying, in response to a media content browsing operation triggered by the first user, first media content posted by the second user and associated with the target interaction object, where the first media content includes a first ranking list control;
      displaying a ranking list interface corresponding to the target interaction object in response to a trigger operation by the first user on the first ranking list control, where the ranking list interface includes a trigger control corresponding to the target interaction object; and
      displaying, in response to a trigger operation by the first user on a trigger control corresponding to the target interaction object, a media content obtaining interface associated with the target interaction object.

According to one or more embodiments of the present disclosure, the media content obtaining interface includes a predetermined closing control; and after generating the target media content corresponding to the target interaction object based on the interaction operation triggered by the first user in the media content obtaining interface based on the target interaction object, the method further includes:
canceling display of the ranking list control in response to a trigger operation by the first user on the closing control.

According to one or more embodiments of the present disclosure, the media content obtaining interface includes identification information of the target interaction object; after the canceling displaying the ranking list control in response to the trigger operation by the first user on the closing control, the method further includes:
redisplaying the ranking list control in response to a trigger operation by the first user on the identification information.

According to one or more embodiments of the present disclosure, the generating, according to an interaction operation triggered by the first user in the media content obtaining interface based on the target interaction object, target media content corresponding to the target interaction object includes:
acquiring an image frame to be detected through a predetermined image acquisition device;
detecting whether the image frame to be detected includes a predetermined key object;
if yes, acquiring media content through the image acquisition device, and determining an interaction result corresponding to the target interaction object; and
adding a ranking list control corresponding to the interaction result to the media content to obtain the target media content;

Alternatively, the generating, according to an interaction operation triggered by the first user in the media content obtaining interface based on the target interaction object, target media content corresponding to the target interaction object includes:
in response to a trigger operation by the first user on a predetermined obtaining control, acquiring media content through the image acquisition device, and determining an interaction result corresponding to the target interaction object; and
adding a ranking list control corresponding to the interaction result to the media content to obtain the target media content.

According to one or more embodiments of the present disclosure, after the posting the target media content in response to the posting operation triggered by the first user, the method further includes:
playing the target media content in a media content play interface in response to a browsing operation triggered by the first user for the target media content, where the target media content includes the ranking list control; and
displaying a ranking list interface corresponding to the target interaction object in response to a trigger operation by the first user on the ranking list control; and
the ranking list interface includes ranking list information corresponding to the target interaction object in at least one dimension.

According to one or more embodiments of the present disclosure, the displaying a ranking list interface corresponding to the target interaction object includes:
determining, for each dimension associated with the first user, a first set of users corresponding to the dimension;
determining, according to an interaction result corresponding to a user set in the first set of users that has posted media content based on the target interaction object and a predetermined ranking manner, ranking list information corresponding to the dimension; and
displaying the ranking list information corresponding to the target interaction object in the at least one dimension in the ranking list interface.

According to one or more embodiments of the present disclosure, after determining the ranking list information corresponding to the dimension according to the interaction result corresponding to the at least part of the user sets and the predetermined ranking manner, the method further includes:
determining ranking information of the interaction result in the ranking list information corresponding to the target dimension satisfying the predetermined display condition; and
displaying the ranking information on the ranking list control.

According to one or more embodiments of the present disclosure, displaying the ranking list information corresponding to the target interaction object in the at least one dimension in the ranking list interface includes:
determining ranking information of the interaction result in the ranking list information corresponding to the target dimension satisfying the predetermined display condition; and
displaying the interaction result and the ranking information in the first display region of the ranking list interface, and displaying the ranking list information corresponding to the target dimension satisfying the predetermined display condition in the second display region of the ranking list interface.

According to one or more embodiments of the present disclosure, after displaying the ranking list information corresponding to the target interaction object in the at least one dimension in the ranking list interface, the method further includes:
displaying, for each second user in a user set that has posted media content based on the target interaction object, a predetermined first interaction control in a display region associated with the second user; and
displaying a predetermined first sharing control in a display region associated with the second user for each second user in the user set not posting the media content based on the target interaction object.

According to one or more embodiments of the present disclosure, after displaying the predetermined first sharing control in the display region associated with the second user, the method further includes:
sending recommendation information associated with the target interaction object to the second user in response to a trigger operation by the first user on the first sharing control.

According to a second aspect, an interface display method is provided according to one or more embodiments of the present disclosure, applied on a client of a second user, including:
playing target media content in a media content play interface, where the target media content includes a ranking list control associated with an interaction result of the target interaction object; and
displaying a ranking list interface corresponding to the target interaction object in response to a trigger operation on the ranking list control by the second user, where the ranking list interface includes ranking list information corresponding to the target interaction object in at least one dimension.

According to one or more embodiments of the present disclosure, the displaying the ranking list interface corresponding to the target interaction object in response to the trigger operation on the ranking list control by the second user includes:
in response to a trigger operation on the ranking list control by the second user, determining a second set of users that has posted media content based on the target interaction object in each dimension associated with the second user;
determining, for each dimension, ranking list information corresponding to the target interaction object in the dimension according to an interaction result of each user in the second set of users and a predetermined ranking manner; and
displaying the ranking list information corresponding to the target interaction object in at least one dimension in the ranking list interface.

According to one or more embodiments of the present disclosure, the displaying a ranking list interface corresponding to the target interaction object includes:
displaying the ranking list information corresponding to the target dimension satisfying the predetermined display condition within the ranking list interface.

According to one or more embodiments of the present disclosure, after displaying the ranking list information corresponding to the target dimension satisfying the predetermined display condition in the ranking list interface, the method further includes:
determining a dimension to be displayed selected by the second user in response to a selection operation triggered by the second user in the ranking list interface; and
switching to displaying the ranking list information corresponding to the dimension to be displayed.

According to one or more embodiments of the present disclosure, the display region associated with each user in the ranking list information is displayed with a second interaction control; and
after displaying the ranking list information corresponding to the target dimension satisfying the predetermined display condition in the ranking list interface, the method further includes:
updating, in response to a trigger operation on the second interaction control by the second user, an interaction number corresponding to the user.

According to one or more embodiments of the present disclosure, the ranking list interface includes a predetermined second sharing control; and
after displaying the ranking list interface corresponding to the target interaction object, the method further includes:
displaying a predetermined user list in response to a trigger operation on the second sharing control by the second user, where the user list includes a plurality of identifiers of a plurality of third users having a predetermined association relationship with the second user;
determining a target user selected by the second user based on a selection operation in the user list by the second user; and
sending recommendation information to the target user, where the recommendation information includes a trigger control corresponding to the target interaction object.

According to one or more embodiments of the present disclosure, the ranking list control includes a predetermined third interaction control and/or the ranking list interface includes a predetermined third interaction control; and
after displaying the ranking list interface corresponding to the target interaction object, the method further includes:
in response to a trigger operation on the third interaction control by the second user, skipping to a media content obtaining interface associated with the target interaction object, so that the second user generates media content associated with the target interaction object in the media content obtaining interface.

According to a third aspect, an apparatus for generating a media content is provided according to one or more embodiments of the present disclosure. The apparatus includes:
a display module, configured to display a media content obtaining interface associated with a target interaction object in response to a predetermined trigger operation by the first user;
a generation module, configured to generate, based on an interaction operation triggered by the first user in the media content obtaining interface based on the target interaction object, target media content corresponding to the target interaction object, where the target media content includes a ranking list control associated with an interaction result of the target interaction object; and
a posting module, configured to post the target media content in response to a posting operation triggered by the first user.

According to one or more embodiments of the present disclosure, the display module is configured to:
display, in response to a trigger operation by the first user on a trigger control corresponding to a predetermined target interaction object, a media content obtaining interface associated with the target interaction object;
or, the display module is configured to:
   obtain recommendation information sent by a second user having a predetermined association relationship with the first user, where the recommendation information includes a trigger control corresponding to the target interaction object; and
   display, in response to a trigger operation by the first user on a trigger control corresponding to the target interaction object, a media content obtaining interface associated with the target interaction object;
   or, the display module is configured to:
      display, in response to a media content browsing operation triggered by the first user, first media content posted by the second user and associated with the target interaction object, where the first media content includes a first ranking list control;
      display a ranking list interface corresponding to the target interaction object in response to a trigger operation by the first user on the first ranking list control, where the ranking list interface includes a trigger control corresponding to the target interaction object; and
      display, in response to a trigger operation by the first user on a trigger control corresponding to the target interaction object, a media content obtaining interface associated with the target interaction object.

According to one or more embodiments of the present disclosure, the media content obtaining interface includes a predetermined closing control; and the apparatus further includes:
a display module, configured to cancel display of the ranking list control in response to a trigger operation by the first user on the closing control.

According to one or more embodiments of the present disclosure, the media content obtaining interface includes identification information of the target interaction object; and the apparatus further includes:
a display module configured to redisplay the ranking list control in response to a trigger operation by the first user on the identification information.

According to one or more embodiments of the present disclosure, the generation module is configured to:
acquire an image frame to be detected through a predetermined image acquisition device;
detect whether the image frame to be detected includes a predetermined key object;
if yes, acquire media content through the image acquisition device, and determining an interaction result corresponding to the target interaction object; and
add a ranking list control corresponding to the interaction result to the media content to obtain the target media content;
Or, the generation module is configured to:
   in response to a trigger operation by the first user on a predetermined obtaining control, acquire media content through the image acquisition device, and determining an interaction result corresponding to the target interaction object; and
   add a ranking list control corresponding to the interaction result to the media content to obtain the target media content.

According to one or more embodiments of the present disclosure, the apparatus further includes:
a playing module, configured to play the target media content in a media content playing interface in response to a browsing operation triggered by a first user on a target media content, where the target media content includes the ranking list control; and
a generation module, configured to display a ranking list interface corresponding to the target interaction object in response to a trigger operation by the first user on the ranking list control; and
the ranking list interface includes ranking list information corresponding to the target interaction object in at least one dimension.

According to one or more embodiments of the present disclosure, the generation module is configured to:
determine, for each dimension associated with the first user, a first set of users corresponding to the dimension;
determine, according to an interaction result corresponding to a user set in the first set of users that has posted media content based on the target interaction object and a predetermined ranking manner, ranking list information corresponding to the dimension; and
display the ranking list information corresponding to the target interaction object in the at least one dimension in the ranking list interface.

According to one or more embodiments of the present disclosure, the generation module is further configured to:
determine ranking information of the interaction result in the ranking list information corresponding to the target dimension satisfying the predetermined display condition; and
display the ranking information on the ranking list control.

According to one or more embodiments of the present disclosure, the generation module is configured to:
determine ranking information of the interaction result in the ranking list information corresponding to the target dimension satisfying the predetermined display condition; and
display the interaction result and the ranking information in the first display region of the ranking list interface, and display the ranking list information corresponding to the target dimension satisfying the predetermined display condition in the second display region of the ranking list interface.

According to one or more embodiments of the present disclosure, the apparatus further includes:
a display module, configured to display, for each second user in a user set that has posted media content based on the target interaction object, a predetermined first interaction control in a display region associated with the second user; and
the display module is further configured to display a predetermined first sharing control in a display region associated with the second user for each second user in a user set not posting the media content based on the target interaction object.

According to one or more embodiments of the present disclosure, the apparatus further includes:
a sending module, configured to send recommendation information associated with the target interaction object to the second user in response to a trigger operation by the first user on the first sharing control.

According to a fourth aspect, an interface display apparatus is provided according to one or more embodiments of the present disclosure, applied on a client of a second user, including:
a playing module, configured to play target media content in a media content playing interface, where the target media content includes a ranking list control associated with an interaction result of the target interaction object; and
a display module, configured to display a ranking list interface corresponding to the target interaction object in response to a trigger operation of a second user on the ranking list control, where the ranking list interface includes ranking list information corresponding to the target interaction object in at least one dimension.

According to one or more embodiments of the present disclosure, the display module is configured to:
in response to a trigger operation on the ranking list control by the second user, determine a second set of users that has posted media content based on the target interaction object in each dimension associated with the second user;
determine, for each dimension, ranking list information corresponding to the target interaction object in the dimension according to an interaction result of each user in the second set of users and a predetermined ranking manner; and
display the ranking list information corresponding to the target interaction object in at least one dimension in the ranking list interface.

According to one or more embodiments of the present disclosure, the display module is configured to:
display the ranking list information corresponding to the target dimension satisfying the predetermined display condition within the ranking list interface.

According to one or more embodiments of the present disclosure, the display module is further configured to:
determine a dimension to be displayed selected by the second user in response to a selection operation triggered by the second user in the ranking list interface; and
switching to displaying the ranking list information corresponding to the dimension to be displayed.

According to one or more embodiments of the present disclosure, the display region associated with each user in the ranking list information is displayed with a second interaction control; and
the display module is further configured to:
update, in response to a trigger operation on the second interaction control by the second user, an interaction number corresponding to the user.

According to one or more embodiments of the present disclosure, the ranking list interface includes a predetermined second sharing control; and
the display module is further configured to:
display a predetermined user list in response to a trigger operation on the second sharing control by the second user , where the user list includes a plurality of identifiers of a plurality of third users having a predetermined association relationship with the second user;
determine a target user selected by the second user based on a selection operation in the user list by the second user; and
send recommendation information to the target user, where the recommendation information includes a trigger control corresponding to the target interaction object.

According to one or more embodiments of the present disclosure, the ranking list control includes a predetermined third interaction control and/or the ranking list interface includes a predetermined third interaction control; and
the apparatus further includes:
a display module, configured to, in response to a trigger operation on the third interaction control by the second user, jump to a media content obtaining interface associated with the target interaction object, so that the second user generates media content associated with the target interaction object in the media content obtaining interface.

According to a fifth aspect, an electronic device is provided according to one or more embodiments of the present disclosure, including: at least one processor and a memory;
the memory storing computer executable instructions; and
the at least one processor executing the computer-executable instructions stored in the memory, so that the at least one processor executes the media content generation method according to the first aspect and various possible designs of the first aspect.

According to a sixth aspect, a computer-readable storage medium is provided according to one or more embodiments of the present disclosure, where the computer-readable storage medium stores computer-executable instructions, and when the processor executes the computer-executable instruction, the media content generation method according to the first aspect and the possible designs of the first aspect is implemented.

According to a seventh aspect, a computer program product is provided according to one or more embodiments of the present disclosure, including a computer program, where the computer program, when executed by a processor, implements the media content generation method according to the first aspect and various possible designs of the first aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method of media content generation, wherein the method is applied on a client of a first user and comprises:
in response to a predetermined trigger operation, displaying a media content obtaining interface associated with a target interaction object;
generating, according to an interaction operation triggered based on the target interaction object in the media content obtaining interface, target media content corresponding to the target interaction object, wherein the target media content comprises a ranking list control associated with an interaction result of the target interaction object;
in response to a posting operation, posting the target media content.

2. The method of claim 1, wherein in response to the predetermined trigger operation, displaying the media content obtaining interface associated with the target interaction object comprises:
in response to a trigger operation on a trigger control corresponding to a predetermined target interaction object, displaying the media content obtaining interface associated with the target interaction object,
or, in response to the predetermined trigger operation, displaying the media content obtaining interface associated with the target interaction object comprises:
obtaining recommendation information sent by a second user having a predetermined association relationship with the first user, wherein the recommendation information comprises a trigger control corresponding to the target interaction object;
in response to a trigger operation on the trigger control corresponding to the target interaction object, displaying the media content obtaining page associated with the target interaction object;
or, in response to the predetermined trigger operation, displaying the media content obtaining interface associated with the target interaction object comprises:
in response to a media content browsing operation, displaying first media content associated with the target interaction object and posted by the second user, the first media content comprising a first ranking list control;
in response to a trigger operation on the first ranking list control, displaying a ranking list interface corresponding to the target interaction object, wherein the ranking list interface comprises a trigger control corresponding to the target interaction object;
in response to a trigger operation on the trigger control corresponding to the target interaction object, displaying the media content obtaining interface associated with the target interaction object.

3. The method of claim 1, wherein the media content obtaining interface comprises a predetermined closing control and the method further comprises:
in response to a trigger operation on the closing control, canceling display of the ranking list control.

4. The method of claim 3, wherein the media content obtaining interface comprises identification information of the target interaction object and the method further comprises:
in response to a trigger operation on the identification information, redisplaying the ranking list control.

5. The method of claim 1, wherein generating, according to the interaction operation triggered based on the target interaction object in the media content obtaining interface, the target media content corresponding to the target interaction object comprises:
acquiring, by a predetermined image acquisition device, an image frame to be detected;
detecting whether the image frame to be detected comprises a predetermined key object;
if so, acquiring media content by the image acquisition device, and determining the interaction result corresponding to the target interaction object;
adding the ranking list control corresponding to the interaction result, in the media content to obtain the target media content;
or, generating, according to the interaction operation triggered based on the target interaction object in the media content obtaining interface, the target media content corresponding to the target interaction object comprises:
in response to a trigger operation on a predetermined obtaining control, acquiring media content by the image acquisition device, and determining the interaction result corresponding to the target interaction object;
adding the ranking list control corresponding to the interaction result, in the media content to obtain the target media content.

6. The method of any of claims 1 to 5, further comprising:
in response to a browsing operation triggered for the target media content, playing the target media content in a media content play interface, wherein the target media content comprises the ranking list control;
in response to a trigger operation on the ranking list control, displaying a ranking list interface corresponding to the target interaction object;
wherein the ranking list interface comprises ranking list information corresponding to the target interaction object in at least one dimension.

7. The method of claim 6, wherein displaying the ranking list interface corresponding to the target interaction object comprises:
determining, for each dimension associated with the first user, a first set of users corresponding to the dimension;
determining the ranking list information corresponding to the dimension, according to the interaction result corresponding to a set of users having posted media content based on the target interaction object in the first set of users and a predetermined ranking manner;
displaying, in the ranking list interface, the ranking list information corresponding to the target interaction object in the at least one dimension.

8. The method of claim 7, further comprising:
determining ranking information of the interaction result in the ranking list information corresponding to a target dimension satisfying a predetermined display condition;
displaying the ranking information on the ranking list control.

9. The method of claim 7, wherein displaying, in the ranking list interface, the ranking list information corresponding to the target interaction object in the at least one dimension comprises:
determining ranking information of the interaction result in the ranking list information corresponding to a target dimension satisfying a predetermined display condition;
displaying the interaction result and the ranking information in a first display region of the ranking list interface, and displaying the ranking list information corresponding to the target dimension satisfying the predetermined display condition in a second display region of the ranking list interface.

10. The method of claim 7, wherein after displaying, in the ranking list interface, the ranking list information corresponding to the target interaction object in the at least one dimension, the method further comprises:
displaying, for each second user in the set of users having posted the media content based on the target interaction object, a predetermined first interaction control in a display region associated with the second user;
displaying, for each second user in a set of users not posting media content based on the target interaction object, a predetermined first sharing control in a display region associated with the second user.

11. The method of claim 10, wherein after displaying the predetermined first sharing control in the display region associated with the second user, the method further comprises:
in response to a trigger operation on the first sharing control, sending recommendation information associated with the target interaction object to the second user.

12. A method of interface display, wherein the method is applied on a client of a second user and comprises:
playing target media content in a media content play interface, wherein the target media content comprises a ranking list control associated with an interaction result of the target interaction object;
in response to triggering on the ranking list control by the second user, displaying a ranking list interface corresponding to the target interaction object, wherein the ranking list interface comprises ranking list information corresponding to the target interaction object in at least one dimension.

13. The method of claim 12, wherein in response to the trigger operation on the ranking list control by the second user, displaying the ranking list interface corresponding to the target interaction object comprises:
in response to the trigger operation on the ranking list control by the second user, determining, for each dimension associated with the second user, a second set of users having posted media content based on the target interaction object;
determining, for each dimension, the ranking list information corresponding to the target interaction object in the dimension according to the interaction result of each user in the second set of users and a predetermined ranking manner;
displaying, in the ranking list interface, the ranking list information corresponding to the target interaction object in the at least one dimension.

14. The method of claim 12, wherein displaying the ranking list interface corresponding to the target interaction object comprises:
displaying, in the ranking list interface, the ranking list information corresponding to a target dimension satisfying a predetermined display condition.

15. The method of claim 14, wherein after displaying, in the ranking list interface, the ranking list information corresponding to the target dimension satisfying the predetermined display condition, the method further comprises:
in response to a selection operation triggered by the second user in the ranking list interface, determining a dimension to be displayed selected by the second user;
switching to displaying the ranking list information corresponding to the dimension to be displayed.

16. The method of claim 14, wherein a display region associated with each user in the ranking list information is displayed with a second interaction control;
after displaying, in the ranking list interface, the ranking list information corresponding to the target dimension satisfying the predetermined display condition, the method further comprises:
in response to a trigger operation on the second interaction control by the second user, updating an interaction number corresponding to the user.

17. The method of claim 12, wherein the ranking list interface comprises a predetermined second sharing control; and
after displaying the ranking list interface corresponding to the target interaction object, the method further comprises:
in response to a trigger operation on the second sharing control by the second user , displaying a predetermined user list, wherein the user list comprises a plurality of identifiers of a plurality of third users having a predetermined association relationship with the second user;
determining a target user selected by the second user based on a selection operation in the user list by the second user;
sending recommendation information to the target user, wherein the recommendation information comprises a trigger control corresponding to the target interaction object.

18. The method of any of claims 12 to 17, wherein the ranking list control comprises a predetermined third interaction control and/or the ranking list interface comprises a predetermined third interaction control; and
the method further comprises:
in response to a trigger operation on the third interaction control by the second user, redirecting to a media content obtaining interface associated with the target interaction object to enable the second user to generate media content associated with the target interaction object in the media content obtaining interface.

19. An apparatus for media content generation, wherein the apparatus is applied on a client of a first user and comprises:
a display module configured to in response to a predetermined trigger operation, display a media content obtaining interface associated with a target interaction object;
a generation module configured to generate, according to an interaction operation triggered based on the target interaction object in the media content obtaining interface, target media content corresponding to the target interaction object, wherein the target media content comprises a ranking list control associated with an interaction result of the target interaction object;
a posting module configured to in response to a posting operation, post the target media content.

20. An apparatus for interface display, wherein the apparatus is applied on a client of a second user and comprises:
a playing module configured to play target media content in a media content play interface, wherein the target media content comprises a ranking list control associated with an interaction result of the target interaction object;
a display module configured to in response to a trigger operation on the ranking list control by the second user, display a ranking list interface corresponding to the target interaction object, wherein the ranking list interface comprises ranking list information corresponding to the target interaction object in at least one dimension.

21. An electronic device, wherein the device comprises: a processor and a memory;
the memory storing computer executable instructions;
the processor executing the computer executable instructions stored in the memory to cause the processor to be configured with the method of media content generation of any of claims 1 to 11 or claims 12 to 18.

22. A computer-readable storage medium, wherein the computer-readable storage medium stores computer-executable instructions, and the computer-executable instructions, when executed by the processor, implement the method of media content generation of any of claims 1 to 11 or claims 12 to 18.

23. A computer program product, comprising a computer program, wherein the computer program is executed by a processor to configure the processor with the method of media content generation of any of claims 1 to 11 or claims 12 to 18.
